# EUROPEAN PATENT SPECIFICATION

(11) **EP 3 175 061 B1**
(45) Date of publication and mention of the grant of the patent: **13.11.2019**
(21) Application number: 15741297.4
(22) Date of filing: 20.07.2015
(51) Int. Cl.: E04H 17/00, B63G 13/00

(54) **A SECURITY BARRIER**
SICHERHEITSSPERRE
BARRIÈRE DE SÉCURITÉ

(30) Priority: 31.07.2014 GB 201413573
(43) Date of publication of application: 07.06.2017
(73) Proprietor: McGarian, Bruce, Stonehaven Aberdeenshire AB39 2HW (GB)
(72) Inventor: McGarian, Bruce, Stonehaven Aberdeenshire AB39 2HW (GB)
(74) Representative: Beattie, Alex Thomas Stewart
(86) International application number: PCT/GB2015/052094
(87) International publication number: WO 2016/016609

(56) References cited:
- AU-A1- 2006 235 859
- GB-A- 2 496 757
- JP-A- 2001 191 983

## Description

THIS INVENTION relates to a security device, and in particular concerns a device for helping to prevent people from scaling walls and other similar structures.

There are many circumstances in which a wall is provided for security purposes, and it is desired to prevent unauthorised or unwelcome individuals from climbing over the wall. For instance, a wall may form part of a security perimeter around goods or merchandise, or around personal or commercial premises where thieves or vandals may attempt to gain access. As a further example, a wall may form part of a perimeter around a prison or a similar facility, where it is desired to prevent inmates from scaling the wall to escape.

Traditional techniques for discouraging individuals from climbing over walls include barbed and/or razor wire, or sharp objects such as fragments of glass embedded in a top surface of the wall. Such approaches are intended to discourage individuals from climbing over the wall by creating a risk of serious injury where such an attempt is made.

AU2006235859 discloses an animal-containment fence accessory which is attachable to a fence. The panel laterally projects from a side of the fence to deter an animal attempting to scale or jump over the fence. The panel has a downward sloping angle so that the animal cannot gain a grip or hold on the panel.

GB2496757 discloses a security bulwark barrier provided to deter and preferably prevent unauthorised boarding of ships by pirates. A number of the security bulwarks can be connected together and to the peripheral edges of a ship to form a security barrier. Each security bulwark comprises a bulbous head section, a rear wall and a skirt that in use lies adjacent to and substantially parallel a ship's wall or railing. The head section has a generally smooth outer surface that slopes downwardly and outwardly from its uppermost point so as to form an overhang extending away from the rear wall. The security barrier is able to prevent the use of conventional roofing ladders

in gaining unauthorised access to the ship and the overhang makes it difficult for an individual to climb over, even with grappling hooks.

It is an object of the present invention to provide an improved security barrier.

One aspect of the present disclosure provides a security barrier comprising: a substantially planar support element having a top edge and a bottom edge; and a bulbous barrier element, the barrier element having a top edge and a bottom edge, with a curved protruding section extending between the top and bottom edges, the protruding section extending away from the plane containing the top and bottom edges, wherein: the support element and barrier element are connected to each other at a connection region at or near their top edges and define an internal space therebetween which may receive a generally planar structure having a top edge, and wherein in use the security barrier may be rested on the structure so that the connection region lies on or near the top edge of the structure, with the support element and the barrier element lying on opposing sides of the structure, with the support element lying close to the plane of the structure and the protruding section protruding outwardly from the plane of the structure; and a bracing element protrudes from the inner surface of the barrier element, at or near the bottom edge thereof, into the internal space between the support element and the barrier element, and assists in bracing the security barrier with respect to the structure, wherein the bracing element and the support element are spaced apart from each other so that in use they lie on opposing sides of the structure.

Advantageously, the support element and barrier element are permanently connected to one another.

Preferably, the support element and barrier element are integrally formed with one another.

Conveniently, when the security barrier is in a resting, undistorted state, the distance between the bracing element and the support element is less than the distance between the bottom edge of the barrier element and the support element.

Advantageously, when the security barrier is in a resting, undistorted state, the distance between the bracing element and the support element is less than 3cm.

Conveniently, at least the connection region is formed from a resilient material to allow the support element and barrier element to be moved apart from each other to receive the structure therebetween.

Advantageously, the security barrier comprises a single bracing element.

Preferably, the single bracing element extends substantially all of the way across the width of the barrier element.

Alternatively, the security barrier comprises two or more bracing elements.

Preferably, the bracing element is attached to the barrier element in a way that does not give rise to any features on the outer surface of the barrier element.

Conveniently, the bracing element is attached to the inner surface of the barrier element by use of an adhesive or a welding process.

Advantageously, the bracing element comprises a bracing portion that protrudes from the barrier element and has a free end that is directed towards the support element.

Preferably, the free end comprises a bracing portion that is substantially parallel with the support element.

Conveniently, the bracing element comprises a bracing portion that lies substantially parallel with the support element.

Advantageously, the bracing portion is connected to the barrier element at or near its lower end, and is connected to the support element at or near its upper end.

Preferably, the security barrier further comprises a second support element that lies adjacent the support element, wherein the second support element is attached to an upper end of the barrier element.

Conveniently, the support element and barrier element are formed from a single sheet of material.

Advantageously, the bracing element is also formed from the same sheet of material.

Preferably, the second support element is also formed from the same sheet of material.

One aspect of the present invention, according to appended claim 1, provides a security barrier comprising: a substantially planar support element having a top edge and a bottom edge; and a bulbous barrier element, the barrier element having a top edge and a bottom edge, with a curved protruding section extending between the top and bottom edges, the protruding section extending away from the plane containing the top and bottom edges, wherein: the support element and barrier element are integrally or unreleasably connected to each other at a connection region at or near their top edges and define an internal space therebetween which may receive a generally planar structure having a top edge, and wherein the security barrier may be rested on the structure so that the connection region lies on or near the top edge of the structure, with the support element and the barrier element lying on opposing sides of the structure, with the support element lying close to the plane of the structure and the protruding section protruding outwardly from the plane of the structure; and a bracing element extends between the inner surface of the barrier element and the inner surface of the support element, at or near the bottom edges thereof, into the internal space between the support element and the barrier element, and assists in bracing the security barrier.

Conveniently, the bracing element is spaced apart from the bottom edges of the support element and barrier element.

Advantageously, the bracing element is releasably attachable to one or both of the support element and bracing element.

Preferably, the bracing element is attached to the barrier element in a way that does not give rise to any features on the outer surface of the barrier element. Conveniently, the bracing element is attached to the inner surface of the barrier element by use of an adhesive or a welding process.

Advantageously, the bracing element is formed to present a downward-facing trough or channel.

Preferably, the bracing element is attached, or may be attached, to both the support element and the barrier element.

Conveniently, the bracing element is substantially rigid.

A further aspect of the present disclosure provides a method of installing a security barrier, the method comprising the steps of: providing a security barrier according to the above; and placing the security barrier on a generally planar structure having substantially no apertures therethrough in the region over which the security barrier is placed, so that the support element lies on one side of the structure, close to the plane of the structure, and the barrier element lies on the other side of the structure and protrudes away from the plane of the structure.

Advantageously, the structure comprises a wall.

Preferably, the step of placing the security barrier on the structure comprises placing the security barrier so that the connection region thereof lies on or near the top edge of the structure.

Conveniently, the method further comprises the step of connecting the security barrier to the structure by way of a connector that is sunk or driven into the structure.

Advantageously, the method further comprising the step of placing a plurality of security barriers according to the above on the structure so that the security barriers are substantially adjacent to one another.

Another aspect of the present invention, according to appended claim 9, provides a method of installing a security barrier, the method comprising the steps of: providing a security barrier according to the above; and placing the security barrier on a rail which is raised above a surface, a vertical plane being defined between the rail and the surface, so that the rail lies at or near the top edge of the support element and the top edge of the barrier element, the support element extends close to the vertical plane, and the protruding section protrudes outwardly from the vertical plane.

Preferably, the surface has an upstanding wall provided thereon substantially underneath the rail.

Conveniently, the bracing element rests on the top of the upstanding wall. Advantageously, the bracing element comprises a downward-facing trough or channel which receives the upstanding wall.

Preferably, the rail is the rail of a ship, and the surface is the deck of the ship.

Conveniently, the method further comprises the step of placing a plurality of security barriers according to the above on the rail so that the security barriers are substantially adjacent to one another.

Another aspect of the present invention, according to appended claim 15, provides a ship having one or more security devices according to the above positioned on a rail thereof.

In order that the present invention may be more readily understood embodiments thereof will now be described, by way of example, with reference to the accompanying drawings in which:
Figures 1 to 3 show a first security barrier embodying the present invention;
Figures 4 and 5 show a second security barrier embodying the present invention; and

Figures 6 to 8 show a third security barrier not forming part of the claimed invention.

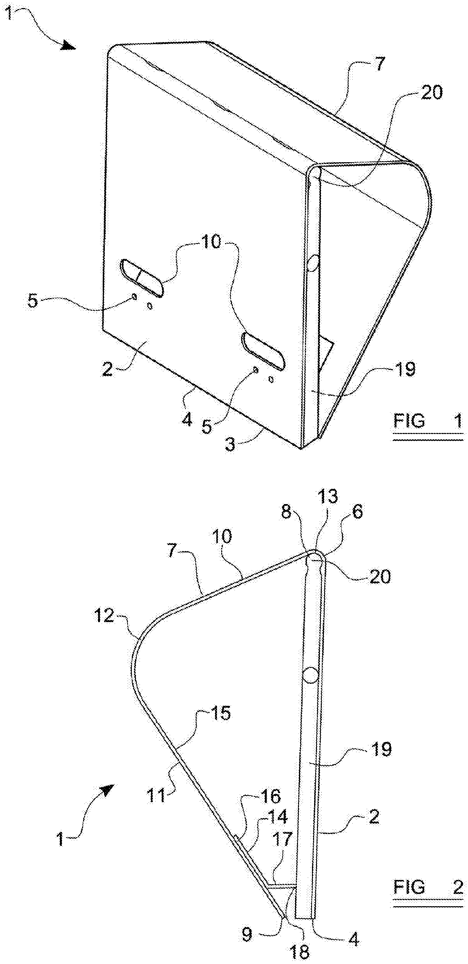

Referring firstly to figures 1 to 3, a first security barrier 1 embodying the present invention is shown. The first security barrier 1 comprises two main components. Firstly, a support element 2 takes the form of a generally planar sheet 3 of material which is substantially rectangular in shape. At its bottom edge 4 the support element 2 presents a free edge, which is preferably generally straight.

Attachment apertures 5 are formed through the support element 2. In the embodiment shown, the attachment elements 5 comprise two pairs of holes 5, one pair provided on either side of the support element 2, near the bottom edge 4 thereof. The attachment holes 5 are formed through the entire thickness of the support element 2.

In other embodiments, a different number of attachment apertures may be formed, in any suitable configuration.

At its top edge 6 the support element 2 is connected to a barrier element 7, which takes the form of a sheet of a robust material. In preferred embodiments the barrier element 7 has substantially the same width as the support element 2.

The barrier element 7 has a top edge 8 and a bottom edge 9, and is formed to have a bulbous shape that protrudes outwardly from the plane which passes between the top and the bottom edges 8, 9. In the embodiment shown, the barrier element 7 comprises a top section 10, which extends downwardly away from its top edge 8 at an angle. The barrier element 7 also includes a bottom section 11, which extends upwardly from the bottom edge 9, again at an angle to the plane connecting the top and bottom edges of 8, 9. The top and bottom regions 10, 11 are connected to one another by a transition region 12, which preferably has a smoothly curved cross-section.

In alternative embodiments the transition section 12 may be formed from a series of thin substantially planar strips which are each set a relatively small angle compared to the adjoining strips, so that the overall cross-section of the transition element 12 is of a generally curved configuration, but formed from a serious of short, flat sections. It will be understood by the skilled person that, depending on the method used to form the security barrier 1, this may be more convenient to manufacture than a smoothly curved transition region 12.

In the embodiment shown, the bottom section 11 is more steeply angled (i.e. closer to the plane connecting the top and bottom edges 8, 9) than the top section. However, this need not be the case. In other embodiments either of the top or bottom sections 10, 11 may be substantially perpendicular to this plane. In addition the transition region is preferably of a sufficiently large radius that it does not present a transition region is preferably of a sufficiently large radius that it does not present an edge which may be grasped readily by a human hand.

In general, the barrier element 7 is formed so as not to present any sharp angles or other features which could present a handhold or toehold, or on which a scaling device such as a grappling hook may easily gain purchase.

Where the top edge 6 of the support element 2 meets the top edge 8 of the barrier element 7, there is preferably a curved connection region 13, which presents a downward-facing trough or channel.

The top edges 6, 8 of the support element 2 and barrier element 7 are preferably permanently connected to one another, and indeed the support element 2 and barrier element 7 may be formed from a single continuous sheet of material which is bent and/or shaped to form the support element 2 and barrier element 7.

In other embodiments the support element 2 and barrier element 7 may be formed separately and subsequently connected to one another permanently, for instance through the use of bolts or similar connecting means, or by a welding or other fusing process.

In further embodiments, however, the support element 2 and barrier element 7 maybe releasably connectable to one another, and the skilled person will appreciate how this may be achieved.

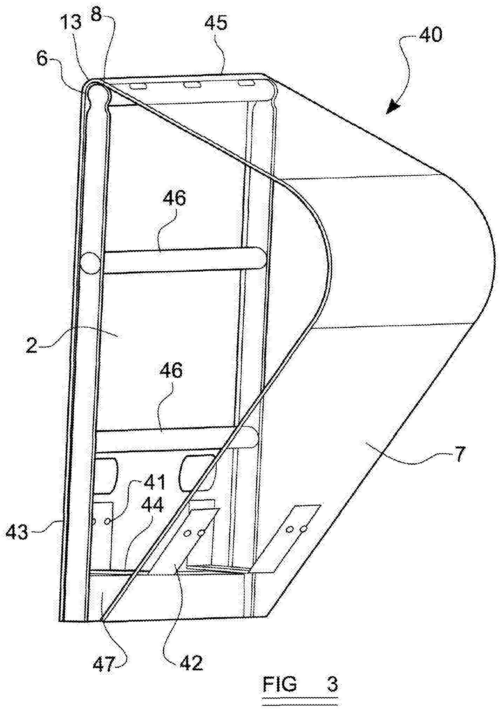

The first security barrier 1 is provided with two bracing elements 41, most clearly visible in figure 3, which are aligned with one another and provided in spaced-apart relation.

Each of the bracing elements 41 comprises respective front and rear connection portions 42, 43, which lie against and are connected to the inner surfaces of the barrier element 7 and the support element 2, respectively. It will be understood that the front and rear connection portions 42, 43 are therefore set at an angle with respect to each other.

A bridge portion 44 extends between the front and rear connection portions 42, 43, and is connected thereto. In the embodiment shown in figures 1 to 3, each bracing element 41 is generally U-shaped. Each bracing element 41 may be formed from a single sheet of a robust material (such as sturdy plastics or a metal such as steel) which is suitably bent or otherwise shaped.

In the embodiment shown in figure 3 the structure with which the security barrier 1 is used is the railing of a ship, which comprises a top rail 45, with two intermediate rails 46 provided generally parallel with the top rail 45. The rails are mounted above the deck of the ship, and the deck is also provided (as is common) with a short, vertical upstanding kick plate 47. The kick plate 47 is provided for, among other purposes, preventing items dropped on the deck from rolling off the deck of the ship.

A typical height for a kick plate would be around 100-150mm, although on some vessels this height may be more or less than this. It will be understood how the security barrier may be adapted to be compatible with kick plates of various heights. In some examples, the support member 2 and barrier member 7 may be provided with a plurality of attachment sites, such as respective sets of spaced apart attachment holes (not shown), to allow the bracing elements 41 to be attached to the support element 2 and bracing element 7 at a variety of different positions with respect to the lower edges 4, 9 of the support element 2 and the barrier element 7.

In preferred embodiments of the invention, the bracing elements 41 are mounted so that the bridge portions 44 thereof are spaced above the lower edges of the support element 2 and barrier element 7. Hence, in use, if the security barrier 1 is placed over the rails 45, 46 so that the lower edges of the support element 2 and barrier element 7 rest on the top surface of the deck, the bridge elements 44 are raised above the surface of the deck by a suitable distance and will lie on the top edge of the kick plate 47.

The bracing elements 41 therefore assist in maintaining the correct shape of the security barrier 1, and holding the security barrier 1 in place once, it has been installed.

It will be understood that, in order for the security barrier 1 to be installed, it is necessary for one or both of the front and rear connection portions 42, 43 of the bracing elements 41 to be detached from the support element 2 and/or barrier element 7.

In one preferred embodiment, the bracing elements 41 are fully detachable from the rest of the security barrier 1. The security barrier 1 can therefore be installed in place by lowering the security barrier 1 downwardly so that the top rail 45 passes through the gap between the lower edges 4, 9 of the support element 2 and barrier element 7. Once the security barrier 1 is in place, the bracing elements 41 can be included by attaching the front and rear connection portions 42, 43 thereof to the support element 2 and barrier element 7, for instance by bolts which pass through appropriately-positioned securing apertures.

As discussed below, however, it is preferable for the outer surface of barrier element 7 to be as smooth and featureless as possible, to make the barrier element 7 difficult to climb over. With this in mind, in an alternative embodiment the front connection portions 42 of the bracing element 41 are attached to the inner surface of the barrier element 7 by a securing process which does not result in any features which protrude beyond the outer surface of the barrier element 7, for instance through the use of adhesive or a welding process.

The rear connection element 43 of the bracing elements 41 may, however, be removably attached to the inner surface of the support element 2, for instance by way of a series of bolts.

In the embodiments shown in figures 1 to 3, a pair of bracing elements 41 is provided, fixed in spaced apart relation on the inner surface 15 of the barrier element 7. However, in other embodiments a single elongate bracing element may be provided, and this may extend across some of the width, or all or substantially all of the width of the barrier element 7.

In other embodiments, three or more separate bracing elements may be provided.

In the embodiment shown in figures 1 to 3 a pair of access apertures 20 are formed through the support element 2. In preferred embodiments the access apertures 20 may be provided into the vicinity of connection apertures 5.

The access apertures 20 are preferably relatively large and may be useful where, for instance, the security barrier 1 is to be used on a structure such as a railing, where ties, straps, or similar connectors may be used to attach the support element 2 to a part of the railing.

While two access apertures 20 are shown in the figures, any suitable number of access apertures 20 may be provided.

It is anticipated that the security barrier 1 will be secured to the railings (or to another nearby feature or structure) to prevent unauthorised removal thereof. The security barrier 1 may be fixed to one or more of the rails 45, 46 by one or more brackets or similar fittings (not shown). Alternatively, or in addition, straps or ties may be used, as discussed above. The skilled reader will understand that there are many ways in which the security barrier may be attached to, or secured with respect to, the railings or another convenient structure.

It will be understood that, where the first security barrier 1 is placed over the top of a railing, it will be very difficult to climb over the railing, starting from the side on which the barrier element 7 lies. The barrier element 7 will provide a smooth and relatively featureless overhang, on which potential climbers will not be able to gain any hand or footholds.

Where it is desired to prevent intruders from climbing over a long section of railing or the like, it is anticipated that a series of security barriers 1 will be placed on the railing side by side adjacent to one another, to form a long, continuous or substantially continuous barrier.

The first security barrier 1 described above is primarily configured to be used with a structure such as the railings of a ship, which has at least one relatively large aperture passing therethrough, through which the bracing elements 41 may pass. However, it is envisaged that the device may be adapted for use with a structure such as a wall which has no apertures passing therethrough in convenient locations. In use of this modified embodiment, the bracing elements 41 are attached to the inner surface of the barrier element 7, but are not attached to the support element 2 (indeed, it will be understood that the wall would prevent this attachment from being made). Instead, the rear connection element 43 may bear against the surface of the wall or other structure, this helping to brace the security barrier 1 in place with respect to the wall.

It will be understood that the shape/configuration of the rear connection element may be altered to be suited to the purpose of bearing against the surface of the structure.

In these embodiments it is preferred that the distance between the rear connection element 43 and the support element 2 when the security barrier 1 is "at rest" is less than the thickness of the wall or other structure. This means that when the security barrier 1 is placed over the wall, the security barrier must flex to accommodate the wall between the barrier element 7 and the support element 2. This in turn will cause the wall to be "gripped" between the support element 2 and the rear connection element 43.

When the security barrier 1 is in the resting state (i.e. substantially undistorted, with no significant external forces acting thereon) the distance between the support element 2 and the rear connection element 43 may be around 1 - 3 cm, although this may be any other suitable distance. The distance may also be approximately zero, i.e. the support element 2 and the rear connection element 43 touch or almost touch when the security barrier 1 is in the resting state.

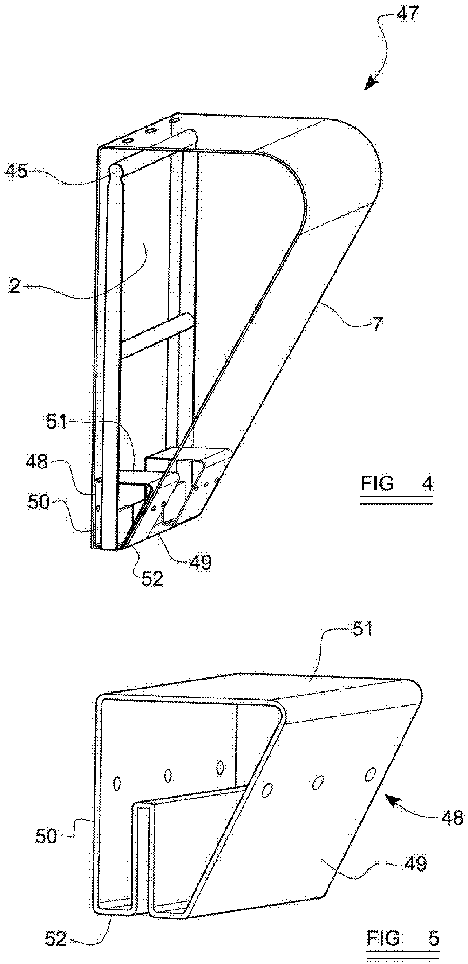

Turning to figure 4, a second security barrier 47 is shown.

The second security barrier 47 is similar to the first security barrier 1, aside from the construction of the bracing elements.

The second security barrier 47 has bracing members 48 which, as is the case with the third security barrier 40, include front and rear connection portions 49, 50 which are connected to the inner surfaces of the barrier element 7 and also element 2, respectively. In contrast to the third security barrier 40, however, the front and rear connection portions 49, 50 extend all, or substantially all, of the way to the bottom edge of the barrier element 7 and support element 2.

A bridge element 51 extends between the top edges of the front and rear connection portions, 48, 49 (although this may be omitted in other embodiments).

Extending between the bottom edges of the front and connection portions 48, 49 is an engagement portion 52, which defines a downward-facing trough or channel which is shaped to fit over a kick plate, as discussed above.

Each of the bracing elements 48 therefore takes the form of a substantially closed loop, the sides of which fit against the inner surfaces of the barrier element 7 and support element 2, and the bottom of which includes a downward-facing trough or channel which is shaped to receive a kick plate.

Figure 5 shows one of the bracing elements 48 in isolation.

Once again, at least one of the front and rear connection portions 49, 50 must be detachable from the barrier element 7 or support element 2. Again, in a preferred embodiment the front connection portion 59 is permanently fixed to the inner surface of the barrier element 7 by a connection method which does not result in any features on the outer surface of the barrier element 7, for instance through an adhesive or a welding process.

The rear connection portion 50 is reasonably attachable to the inner surface of the support element 2, for instance by a series of bolts which pass through appropriate connection holes.

In order to install the second security barrier 47, the rear connection portion 50 is detached from the support element 2, the security barrier 47 is passed over the top rail 45 so that the top rail 45 passes between the bottom edges of the support element 2 and barrier element 7, and the rear connection portion 50 of the bracing elements 48 is then attached to the support element 2.

It will be appreciated that forming the bracing elements 48 to include a trough or channel that fits over the kickplate will lead to increased stability of the resulting security barrier 47, as the lower end of the security barrier 47 will not be able to move in the inboard/outboard direction with respect to the deck.

Once again the second security barrier 47 may be fixed to, or secured in place with respect to, the railings or another convenient structure, as discussed above in relation to the first security barrier 1.

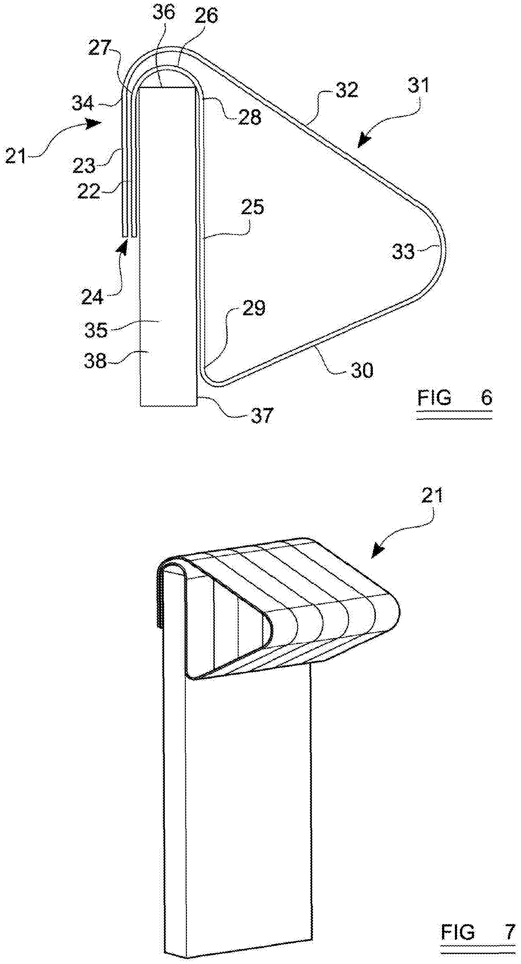

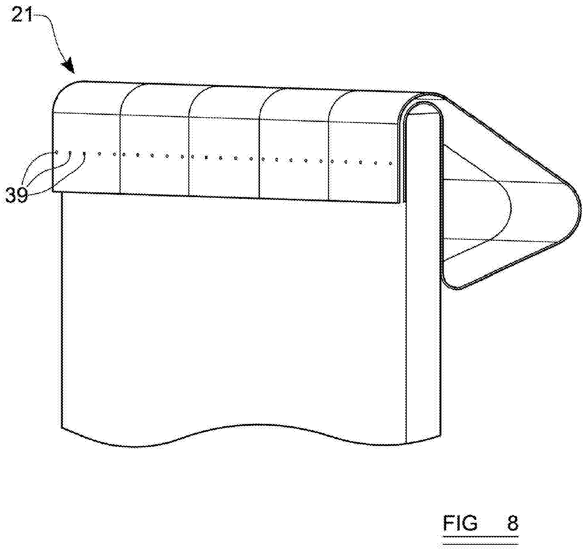

Turning to figures 6 to 8, a third security barrier 21 is shown.

The third security barrier 21 has inner and outer support elements 22, 23, which are each substantially planar and are generally parallel with one another. Both the inner and outer support elements 22, 23 have free lower ends 24, which in the embodiment shown lie generally level with one another.

The inner support element 23 is connected to a bracing plate 25, which is generally parallel with the inner support element 22 and spaced apart therefrom. The inner support element 22 and the bracing plate 25 are connected together at their respective upper edges by a connection region 26 which forms a downward-facing trough or channel. The trough or channel may take any suitable shape, as will become clear from the description below.

At its lower end 29, the support plate 25 is connected to a lower portion 30 of a bulbous barrier element 31, which protrudes away from the plane of the support plate 25, on its side furthest from the inner support element 22. The lower section 30 of the barrier element 31 extends upwardly and outwardly away from the lower edge 29 of the support plate 25. The barrier element 31 also comprises a top section 32, which is again generally planar and extends at an angle with respect to the support plate 25. The upper and lower sections 30, 32 of the barrier element 31 are connected at their outer edges by a transition region 33 which (in common with the embodiment described in relation to figures 1 to 3) may be smoothly curved or comprised of a series of short, generally flat sections.

At its upper edge, the upper section 32 of the barrier element 1 extends over the connection portion 26 that connects the support plate 25 and inner support element 22 to one another, and joins to the top edge 34 of the outer support element 23.

In preferred embodiments, the above-described components of the second security barrier 21 are formed from a single sheet of a robust material, such as a sturdy plastics material, which is of a substantially constant width. The third security barrier 21 may therefore be of a robust, unitary construction.

As is shown in figures 6 to 8, the third security barrier 21 may be placed on top of a planar structure such as a wall 35, that has no or substantially no apertures passing therethrough. In use, the second security barrier 21 is placed over the top edge 36 of the wall 35, so that the support plate 25 lies over the front face 37 of the wall, the inner support element 22 lies against the rear face 38 of the wall, and the connection portion 26 extends over top edge 36 of the wall 35. The barrier element 31 then protrudes outwardly from the front face 37 of the wall, presenting a smooth overhang and greatly increasing the difficulty of climbing over the wall 35.

The connection portion 26 may take any suitable shape, and is not limited to the shape shown in the figures. For instance, a conventional brick wall may have a generally flat top which meets the sides at right-angles, and in order to cooperate with a wall such as this the connection portion 26 may have a corresponding generally squared profile. Similarly, if the security barrier 21 is to be used with a wall having a rounded or pointed top edge, the connection portion 26 may have a corresponding rounded or pointed internal profile.

There is a risk that, without any additional connection between the security barrier 21 and the wall 35, it may be possible for the security barrier 21 simply to be lifted upwardly off the wall 35, and for this reason it is preferred to form at least one additional connection between the security barrier 21 and the wall 35. In the embodiment shown, a series of connection apertures 39 are formed through the inner and outer support elements 22, 23 and connectors such as bolts or anchors which are driven or sunk into the rear surface 38 of the wall can be passed through the connection apertures 39 to hold the security barrier 21 firmly in place with respect to the wall 35.

In the discussion above it is described that the security barriers are suitable for use with railings (or other structures having at least one relatively large aperture passing therethrough), or walls (or other structures having no apertures in the region where the security barrier is placed over the structure). For the avoidance of doubt the security barriers are suitable for use with a wide range of such structures, whether they are fixed/permanent or temporary, and regardless of the materials from which they are made and the details of their constructions.

In the description above, terms such as "upper", "lower", "top" and "bottom" are used. It should be understood that these terms relate to the orientation of the security barriers when they are in their normal positions in use, as shown in the figures, placed over a generally vertical structure having a generally horizontal top edge.

It will be appreciated that the above-described embodiments provide robust and reliable security barriers, which may be used in a variety of different situations. In particular, most or all of the previously-closed security barriers of this type are for use with the rails of a ship, and very few would be suitable for use on a solid wall such as a brick wall.

When used in this specification and claims, the terms "comprises" and "comprising" and variations thereof mean that the specified features, steps or integers are included. The terms are not to be interpreted to exclude the presence of other features, steps or components.

## Claims

1. A security barrier (1, 47) comprising:
a substantially planar support element (2) having a top edge (6) and a bottom edge (9); and
a bulbous barrier element (7), the barrier element having a top edge (8) and a bottom edge (9), with a curved protruding section extending between the top and bottom edges, the protruding section extending away from the plane containing the top and bottom edges,
wherein:
the support element and barrier element are integrally or unreleasably connected to each other at a connection region at or near their top edges and define an internal space therebetween which may receive a generally planar structure having a top edge, and wherein the security barrier may be rested on the structure so that the connection region lies on or near the top edge of the structure, with the support element and the barrier element lying on opposing sides of the structure, with the support element lying close to the plane of the structure and the protruding section protruding outwardly from the plane of the structure; **characterised in that**
a bracing element (41, 48) extends between the inner surface of the barrier element and the inner surface of the support element, spaced above the bottom edges thereof, into the internal space between the support element and the barrier element, and assists in bracing the security barrier.

2. A security barrier according to claim 1, wherein the bracing element is spaced apart from the bottom edges of the support element and barrier element.

3. A security barrier according to any preceding claim, wherein the bracing element is releasably attachable to one or both of the support element and bracing element.

4. A security barrier according to any preceding claim, wherein the bracing element is attached to the barrier element in a way that does not give rise to any features on the outer surface of the barrier element.

5. A security barrier according to any preceding claim, wherein the bracing element is attached to the inner surface of the barrier element by use of an adhesive or a welding process.

6. A security barrier according to any preceding claim, wherein the bracing element is formed to present a downward-facing trough or channel.

7. A security barrier according to any preceding claim, wherein the bracing element is attached, or may be attached, to both the support element and the barrier element.

8. A security barrier according to any preceding claim, wherein the bracing element is substantially rigid.

9. A method of installing a security barrier, the method comprising the steps of:
providing a security barrier (1,47) according to any one of claims 1 to 8; and
placing the security barrier on a rail (45,46) which is raised above a surface, a vertical plane being defined between the rail and the surface, so that the rail lies at or near the top edge of the support element (2) and the top edge of the barrier element (7), the support element extends close to the vertical plane, and the protruding section protrudes outwardly from the vertical plane.

10. A method according to claim 9, wherein the surface has an upstanding wall (47) provided thereon substantially underneath the rail.

11. A method according to claim 10, wherein the bracing element rests on the top of the upstanding wall.

12. A method according to claim 10 or 11, wherein the bracing element comprises a downward-facing trough or channel which receives the upstanding wall.

13. A method according to any one of claims 9 to 12, wherein the rail is the rail of a ship, and the surface is the deck of the ship.

14. A method according to any one of claims 9 to 12, comprising the step of placing a plurality of security barriers according to any one of claims 1 to 8 on the rail so that the security barriers are substantially adjacent to one another.

15. A ship having one or more security devices according to any one of claims 1 to 8 positioned on a rail thereof.

## Patentansprüche

1. Sicherheitssperre (1, 47), umfassend:
Ein wesentlich ebenflächiges Stützelement (2) mit einer oberen Kante (6) und einer unteren Kante (9); und
ein knollenförmiges Sperrelement (7), wobei das Sperrelement eine obere Kante (8) und eine untere Kante (9) aufweist, wobei sich ein gekrümmter, vorstehender Abschnitt zwischen den oberen und unteren Kanten erstreckt, wobei sich der vorstehende Abschnitt von der Ebene weg erstreckt, welche die oberen und unteren Kanten beinhaltet,
wobei:
Das Stützelement und das Sperrelement integral oder unlösbar an einem Verbindungsbereich oder nahe ihren oberen Kanten miteinander verbunden sind und einen Innenraum dazwischen definieren, welcher eine generell ebenflächige Struktur mit einer oberen Kante aufnehmen könnte, und wobei die Sicherheitssperre auf der Struktur ruhen könnte, sodass der Verbindungsbereich auf oder nahe der oberen Kante der Struktur liegt, wobei das Stützelement und das Sperrelement auf entgegengesetzten Seiten der Struktur liegen, wobei das Stützelement nahe der Ebene der Struktur liegt und der hervorstehende Abschnitt von der Ebene der Struktur nach außen hervorsteht; **dadurch gekennzeichnet, dass**
sich ein Aussteifungselement (41, 48) zwischen der Innenfläche des Sperrelements und der Innenfläche des Stützelements, über den unteren Kanten davon beabstandet, in den Innenraum zwischen dem Stützelement und dem Sperrelement erstreckt, und bei der Aussteifung des Sperrelements behilflich ist.

2. Sicherheitssperre nach Anspruch 1, wobei das Aussteifungselement von den unteren Kanten des Stützelements und des Sperrelements beabstandet ist.

3. Sicherheitssperre nach einem vorhergehenden Anspruch, wobei sich das Aussteifungselement lösbar an einem oder beiden des Stützelements und des Aussteifungselements befestigen lässt.

4. Sicherheitssperre nach einem vorhergehenden Anspruch, wobei das Aussteifungselement am Sperrelement auf eine Weise befestigt ist, die keine Features an der Außenfläche des Sperrelements entstehen lässt.

5. Sicherheitssperre nach einem vorhergehenden Anspruch, wobei das Aussteifungselement durch Verwendung eines Klebstoffs oder eines Schweißprozesses an die Innenfläche des Sperrelements befestigt ist.

6. Sicherheitssperre nach einem vorhergehenden Anspruch, wobei das Aussteifungselement geformt ist, einen nach unten gewandten Trog oder Kanal zu präsentieren.

7. Sicherheitssperre nach einem vorhergehenden Anspruch, wobei das Aussteifungselement an sowohl das Stützelement als auch das Sperrelement befestigt ist oder befestigt sein könnte.

8. Sicherheitssperre nach einem vorhergehenden Anspruch, wobei das Aussteifungselement im Wesentlichen starr ist.

9. Verfahren zur Installierung einer Sicherheitssperre, wobei das Verfahren folgende Schritte umfasst:
Bereitstellen einer Sicherheitssperre (1, 47) nach einem der Ansprüche 1 bis 8; und
Platzieren der Sicherheitssperre auf eine Schiene (45, 46), die über einer Oberfläche erhaben ist, wobei eine vertikale Ebene zwischen der Schiene und der Oberfläche definiert ist, sodass die Schiene an oder nahe der oberen Kante des Stützelements (2) und der oberen Kante des Sperrelements (7) liegt, sich das Stützelement nahe der vertikalen Ebene erstreckt, und der hervorstehende Abschnitt von der vertikalen Ebene nach außen hervorsteht.

10. Verfahren nach Anspruch 9, wobei die Oberfläche eine aufrechte Wand (47) aufweist, die im Wesentlichen unterhalb der Schiene daran bereitgestellt ist.

11. Verfahren nach Anspruch 10, wobei das Aussteifungselement auf der Oberseite der aufrechten Wand ruht.

12. Verfahren nach Anspruch 10 oder 11, wobei das Aussteifungselement einen nach unten gewandten Trog oder Kanal umfasst, der die aufrechte Wand aufnimmt.

13. Verfahren nach einem der Ansprüche 9 bis 12, wobei die Schiene die Reling eines Schiffs ist, und die Oberfläche das Deck des Schiffs ist.

14. Verfahren nach einem der Ansprüche 9 bis 12, das den Schritt der Platzierung einer Vielzahl von Sicherheitssperren nach einem der Ansprüche 1 bis 8 auf die Schiene umfasst, sodass die Sicherheitssperren im Wesentlichen aneinander angrenzen.

15. Schiff mit einer oder mehren Sicherheitsvorrichtungen nach einem der Ansprüche 1 bis 8, die auf einer Reling davon positioniert sind.

## Revendications

1. Barrière de sécurité (1, 47) comprenant :
un élément de support sensiblement plan (2) ayant un bord supérieur (6) et un bord inférieur (9) ; et
un élément barrière en forme de bulbe (7), l'élément barrière ayant un bord supérieur (8) et un bord inférieur (9), avec une section saillante courbe s'étendant entre les bords supérieur et inférieur, la section saillante s'étendant en s'éloignant du plan contenant les bords supérieur et inférieur,
où :
l'élément de support et l'élément barrière sont raccordés de manière intégrale ou inamovible l'un avec l'autre au niveau d'une région de raccordement sur ou près de leurs bords supérieurs et définissent un espace interne entre eux qui peut recevoir une structure généralement plane ayant un bord supérieur, et où la barrière de sécurité peut être posée sur la structure de sorte que la région de raccordement se trouve sur ou proche du bord supérieur de la structure, avec l'élément de support et l'élément barrière se trouvant sur des côtés opposés de la structure, avec l'élément de support se trouvant près du plan de la structure et la section saillante faisant saillie vers l'extérieur depuis le plan de la structure ; **caractérisé en ce que**
un élément de renforcement (41, 48) s'étend entre la surface intérieure de l'élément barrière et la surface intérieure de l'élément de support, espacé au-dessus de leurs bords inférieurs, dans l'espace interne entre l'élément de support et l'élément barrière, et est utile pour renforcer la barrière de sécurité.

2. Barrière de sécurité selon la revendication 1, où l'élément de renforcement est espacé des bords inférieurs de l'élément de support et de l'élément barrière.

3. Barrière de sécurité selon l'une quelconque des revendications précédentes, où l'élément de renforcement peut être fixé de manière amovible à soit l'élément de support, soit l'élément de renforcement.

4. Barrière de sécurité selon l'une quelconque des revendications précédentes, où l'élément de renforcement est fixé à l'élément barrière de telle manière qu'il ne crée pas de particularités sur la surface extérieure de l'élément barrière.

5. Barrière de sécurité selon l'une quelconque des revendications précédentes, où l'élément de renforcement est fixé à la surface intérieure de l'élément barrière à l'aide d'un adhésif ou d'un processus de soudage.

6. Barrière de sécurité selon l'une quelconque des revendications précédentes, où l'élément de renforcement est formé pour présenter une cuvette ou un canal tourné vers le bas.

7. Barrière de sécurité selon l'une quelconque des revendications précédentes, où l'élément de renforcement est fixé, ou peut être fixé, à la fois à l'élément de support et à l'élément barrière.

8. Barrière de sécurité selon l'une quelconque des revendications précédentes, où l'élément de renforcement est sensiblement rigide.

9. Procédé d'installation d'une barrière de sécurité, le procédé comprenant les étapes consistant à :
fournir une barrière de sécurité (1,47) selon l'une quelconque des revendications 1 à 8 ; et
placer la barrière de sécurité sur un rail (45,46) qui est élevé au-dessus d'une surface, un plan vertical étant défini entre le rail et la surface, de sorte que le rail se trouve sur ou près du bord supérieur de l'élément de support (2) et du bord supérieur de l'élément barrière (7), l'élément de support s'étend près du plan vertical, et la section saillante fait saillie vers l'extérieur depuis le plan vertical.

10. Procédé selon la revendication 9, où la surface a une paroi verticale (47) fournie sur celle-ci, sensiblement sous le rail.

11. Procédé selon la revendication 10, où l'élément de renforcement repose sur la partie supérieure de la paroi verticale.

12. Procédé selon la revendication 10 ou 11, où l'élément de renforcement comprend une cuvette ou un canal tourné vers le bas qui reçoit la paroi verticale.

13. Procédé selon l'une quelconque des revendications 9 à 12, où le rail est le rail d'un navire, et la surface est le pont du navire.

14. Procédé selon l'une quelconque des revendications 9 à 12, comprenant l'étape consistant à placer une pluralité de barrières de sécurité selon l'une quelconque des revendications 1 à 8 sur le rail de telle sorte que les barrières de sécurité sont sensiblement adjacentes les unes aux autres.

15. Navire ayant un ou plusieurs dispositif(s) de sécurité selon l'une quelconque des revendications 1 à 8, positionné(s) sur un rail de celui-ci.
